# EUROPEAN PATENT APPLICATION

(11) **EP 3 342 653 A1**
(43) Date of publication of application: **04.07.2018**
(21) Application number: 16461584.1
(22) Date of filing: 28.12.2016
(51) Int. Cl.: B60S 1/34, F16C 35/00, F16B 21/20

(54) **PIVOT SHAFT ASSEMBLY FOR A WIPER APPARATUS FOR A VEHICLE**

(71) Applicant: Valeo Autosystemy SP. Z.O.O., 32-050 Skawina (PL)
(72) Inventor: Superson, Marcin, 37-310 Nowa Sarzyna (PL); Rogala, Andrzej, 30-867 Kraków (PL)
(74) Representative: Callu Danseux, Violaine

(57) **Abstract**

The present invention relates to a pivot assembly for a wiper apparatus for a vehicle comprising is a self-positioning fixed washer. The invention also relates to a pivot assembly for a wiper apparatus comprising a spring type fixed washer. The invention also relates to a pivot assembly for a wiper apparatus comprising a spring C-clip.

## Description

### FIELD OF THE INVENTION

The invention relates to a pivot shaft assembly for a wiper apparatus for a vehicle, in particular for a car. A pivot shaft assembly constitutes a part of a wiper module which drives and steers wiper blades.

A pivot shaft assembly comprises a pivot shaft, a pivot shaft housing and washers arranged on the shaft. The shaft comprises two ends, one end for fixing to a support element for transfer a drive to the wiper apparatus and second end for mounting a wiper arm of the wiper apparatus.

### BACKGROUND OF THE INVENTION

Such a pivot shaft assemblies are generally known. The pivot shaft assembly comprises a housing, which needs to be protected against abrasion. The protection against abrasion is usually provided by a washer fixedly mounted to the pivot shaft housing, arranged on a pivot shaft. In known assemblies such a fixedly mounted washer constitutes a flange washer arranged on the pivot shaft.

A disadvantage of the prior art pivot shaft assembly provided with a flange washer is that the flange of flange washer protrudes out of the circumference of the pivot shaft assembly. Thus, the flange can be tangled or folded during assembly operation, which results with extending time required for proper positioning of the flange washer with respect to the housing.

Moreover, since the flange of the flange washer need to be inserted into cavity formed within the housing, there is only one proper position of the flange washer with respect to the housing. Thus, time required for handling, orientation and insertion of the flange washer is significant.

Further disadvantage of the prior art is that a pivot shaft assembly comprises many of washers arranged on the shaft. Many of washers are required in prior art assemblies, since a single washer serves usually only one purpose.

One of the washers which need be provided in the assembly is a spring washer for correction of an axial play of the pivot shaft. In known assemblies, a spring washer is provided as a separate washer providing such a function.

Another of the washer which should be provided in the assembly is a C-clip for retaining the pivot shaft housing with the pivot shaft. In known assemblies, a C-clip is provided as a separate washer.

A disadvantage of the known pivot shaft assemblies is that at least two separate washers need to be provided in order to provide above mentioned features of the assembly. Thus, many of washers must be used. Therefore, there are a big number of components in the pivot shaft assembly and in consequence time required for assembly operation is long and costs of performing the operation are significantly high.

Thus, there is a need for an improved pivot shaft assembly comprising reduced number of components.

Further, there is a need for a pivot shaft assembly having less weight.

Further, there is a need for a pivot shaft assembly which is assembled in an easy and fast manner.

Further, there is a need for a pivot shaft assembly which requires less time and costs for assembly operation.

### SUMMARY OF THE INVENTION

To fulfill the above mentioned needs, the present invention provides a pivot shaft assembly for a wiper apparatus for a vehicle comprises: a pivot shaft; a pivot shaft housing for housing the pivot shaft; a fixed washer mounted fixedly with respect to the pivot shaft housing; wherein the fixed washer is a self-positioning fixed washer provided with at least one recess and/or protrusion for positioning of the fixed washer with respect to the pivot shaft housing; and the pivot shaft housing is provided with protrusion and/or recess having shape corresponding to the recess and/or protrusion of the fixed washer for fixing the fixed washer with respect to the pivot shaft housing.

Since the fixed washer of the invention does not have parts, as for example a flange, which stands out of beyond the outer circumference of the pivot shaft assembly, risk of tangling of folding the self-positioning washer is avoided.

Moreover, when a flange is eliminated, weight and size of the pivot shaft assembly is reduced. Additionally, less material is needed for manufacturing a fixed washer than flange washer. Therefore, costs of manufacturing the fixed washer, and, consequently, costs of the assembly are reduced. Further, less space is required for storing fixed washers, which gives additional advantage.

Moreover, the self-positioning fixed washer can be used in automatic washer feeder.

Preferably, the pivot shaft assembly comprises the self-positioning fixed washer which is provided with recess and/or protrusion arranged on the circumference of the fixed washer.

Preferably, the pivot shaft assembly comprises the self-positioning fixed washer which is provided with protrusion arranged on the circumference of the fixed washer.

Preferably, the pivot shaft assembly comprises the self-positioning fixed washer which is provided with recess arranged on the circumference of the fixed washer.

Preferably, the recess and/or protrusion are arranged on inner circumference of the fixed washer.

Preferably, the recess and/or protrusion are arranged on outer circumference of the fixed washer.

Preferably, the self-positioning fixed washer is provided with three recesses arranged symmetrically on of the circumference of the fixed washer.

When the self-positioning fixed washer is provided with three recesses and/or protrusions located symmetrically on a circumference of the self-positioning fixed washer and the pivot shaft housing having shape corresponding to the recess and/or protrusion of the self-positioning washer, there are three positions in which the washer can be fitted with respect to the housing. Since three orientations of the self-positioning fixed washer are possible, the time required for handling, orientation and insertion of the washer is reduced.

Preferably, the self-positioning fixed washer is provided with four recesses arranged symmetrically on of the circumference of the fixed washer.

Four recesses and/or protrusions arranged symmetrically on a circumference of the self-positioning fixed washer provides four positions in which the washer can be fitted with respect to the housing. Thus, time saving during assembly operation is even more advantageous. Moreover, the self-positioning fixed washer is much lighter comparing to the flange washer, since less material is used.

Preferably, the recess is in the form of cut-out. Preferably, the recess and/or protrusion of the fixed washer are located substantially in the plane of the fixed washer.

The fixed washer is provided with protrusion and/or recess located in the plane of said fixed washer, thus, a fixed washer is substantially flat, which results with many advantages during manufacturing of the washer as such and the pivot shaft assembly. When the fixed washer is substantially flat, the fixed washer is easily to manufacture and operation and has less weight.

Preferably, a pivot shaft assembly comprises a pivot shaft having a first end for fixing to a support element for transfer a drive to the wiper apparatus and a second end for mounting a wiper arm of the wiper apparatus, and the pivot shaft assembly comprises: a first set of washers arranged on the pivot shaft adjacent to the first end of the pivot shaft, a second set of washers arranged on the pivot shaft adjacent to the second end of the pivot shaft, a bearing arranged on the pivot shaft between the first set of washers and the second set of washers, wherein the first set of washers is arranged between the bearing and the first end of the pivot and comprises an O-ring arranged adjacent to the bearing, a fixed washer mounted fixedly with respect to the pivot shaft housing, arranged adjacent to the O-ring: a spring washer arranged adjacent the fixed washer and a flat washer. The second set of washers is arranged between the bearing and the second end of the pivot shaft and, the second set of washers comprises: an O-ring for sealing the bearing, the O-ring arranged adjacent to the bearing; and the fixed washer mounted fixedly with respect to the pivot shaft housing arranged adjacent to the O-ring; a washer, a washer flat and a c-clip for retaining the pivot shaft housing with the pivot shaft.

The present invention further provides a pivot shaft assembly for a wiper apparatus for a vehicle comprising a pivot shaft; a pivot shaft housing for housing the pivot shaft; a fixed washer mounted fixedly with respect to the pivot shaft housing; wherein the fixed washer is a spring type fixed washer further providing correction of axial play of the pivot shaft.

The spring type fixed washer comprised in the pivot shaft housing according to the invention, provides both protection against abrasion and correction of an axial play of the pivot shaft. The spring type fixed washer as one component of the pivot assembly provides two functions, therefore the number of components of the pivot assembly is reduced. Consequently, costs and time of assembly operation is reduced. Moreover, weight and size of the pivot assembly is reduced.

Preferably, a pivot assembly comprises the spring type fixed washer which is a flange washer; and the pivot shaft housing is provided with protrusion having shape corresponding to the recess and/or protrusion of the flange washer for fixing the flange washer with respect to the pivot shaft housing.

Preferably, a pivot shaft assembly comprises the spring type fixed washer which is a self-positioning fixed washer provided with at least one recess and/or protrusion for positioning of the fixed washer with respect to the pivot shaft housing; and the pivot shaft housing is provided with protrusion having shape corresponding to the recess and/or protrusion of the fixed washer for fixing the fixed washer with respect to the pivot shaft housing.

The spring type fixed washer which is a self-positioning fixed washer provides two features in one washer and in the same time the washer provides above described advantaged of the self-positioning fixed washer. Thus, a pivot shaft assembly provided with the washer requires less time for assembly operation, thus reducing costs and weight of the assembly.

Preferably, the pivot shaft assembly comprises the self-positioning fixed washer which is provided with recess and/or protrusion arranged on the circumference of the fixed washer.

Preferably, the pivot shaft assembly comprises the self-positioning fixed washer which is provided with protrusion arranged on the circumference of the fixed washer.

Preferably, the pivot shaft assembly comprises the self-positioning fixed washer which is provided with recess arranged on the circumference of the fixed washer.

Preferably, the recess and/or protrusion are arranged on inner circumference of the fixed washer.

Preferably, the recess and/or protrusion are arranged on outer circumference of the fixed washer.

Preferably, the self-positioning fixed washer is provided with three recesses arranged symmetrically on of the circumference of the fixed washer.

Preferably, the self-positioning fixed washer is provided with four recesses arranged symmetrically on of the circumference of the fixed washer.

Preferably, a pivot shaft assembly comprises a pivot shaft having a first end for fixing to a support element for transfer a drive to the wiper apparatus and a second end for mounting a wiper arm of the wiper apparatus, a pivot shaft housing for housing the pivot shaft; a first set of washers arranged on the pivot shaft adjacent to the first end of the pivot shaft, a second set of washers arranged on the pivot shaft adjacent to the second end of the pivot shaft, a bearing arranged on the pivot shaft between the first set of washers and the second set of washers, wherein the first set of washers is arranged between the bearing and the first end of the pivot shaft and the first set of washers comprises: an O-ring for sealing the bearing, the O-ring is arranged adjacent to the bearing, a fixed washer mounted fixedly with respect to the pivot shaft housing, arranged adjacent to the O-ring, a washer arranged between the fixed washer and a crank. The second set of washers is arranged between the bearing and the second end of the pivot shaft, and the second set of washers comprises: an O-ring for sealing the bearing, the O-ring arranged adjacent to the bearing; and the fixed type spring washer mounted fixedly with respect to the pivot shaft housing; a washer flat, a washer and a c-clip for retaining the pivot housing with the pivot.

The present invention further provides a pivot shaft assembly for a wiper apparatus for a vehicle comprising a pivot shaft; a pivot shaft housing for housing the pivot shaft; and a C-clip for retaining the pivot shaft housing with the pivot shaft; wherein the C-clip is a spring C-clip further providing elimination of an axial play of the C-clip.

Since the spring C-clip provides two features, namely acts as a C-clip and a spring washer at the same time, a need of use in the pivot shaft assembly, a separate, additional spring washer is eliminated. Therefore, weight and size of the pivot shaft assembly is reduced. Thus, time of the assembly operation is reduced and costs of manufacturing of the pivot shaft assembly are reduced.

Preferably, a pivot shaft assembly comprises the fixed washer which is a flange washer.

Preferably, a pivot shaft assembly comprises the fixed washer which is a self-positioning washer provided with recess and/or protrusion for positioning of the fixed washer with respect to the pivot shaft housing; and the pivot shaft housing is provided with protrusion having shape corresponding to the recess and/or protrusion of the fixed washer for fixing the fixed washer with respect to the pivot shaft housing.

Preferably, a pivot shaft assembly comprises the spring type self-positioning fixed washer which is provided with recess and/or protrusion arranged on circumference of the fixed washer.

Preferably, the pivot shaft assembly comprises the spring type self-positioning fixed washer which is provided with recess arranged on the circumference of the fixed washer.

Preferably, the pivot shaft assembly comprises the spring type self-positioning fixed washer which is provided with protrusion arranged on the circumference of the fixed washer.

Preferably, the pivot shaft assembly comprises the spring type self-positioning fixed washer which is provided with recess and protrusion arranged on the circumference of the fixed washer.

Preferably, the recess and/or protrusion are arranged on inner circumference of the fixed washer.

Preferably, the recess and/or protrusion are arranged on outer circumference of the fixed washer.

Preferably, the self-positioning fixed washer is provided with three recesses arranged symmetrically on of the circumference of the fixed washer.

Preferably, the self-positioning fixed washer is provided with four recesses arranged symmetrically on of the circumference of the fixed washer.

Preferably, a pivot shaft assembly comprises a pivot shaft having a first end for fixing to a support element for transfer a drive to the wiper apparatus and a second end for mounting a wiper arm of the wiper apparatus, a pivot shaft housing for housing the pivot shaft; a first set of washers arranged on the pivot shaft; adjacent to the first end of the pivot shaft, a second set of washers arranged on the pivot shaft adjacent to the second end of the pivot shaft, a bearing arranged on the pivot shaft between the first set of washers and the second set of washers, wherein the first set of washers is arranged between the bearing and the first end of the pivot shaft and comprises: an O-ring arranged adjacent to the bearing, a fixed washer mounted fixedly with respect to the pivot shaft housing, arranged adjacent to the O-ring; a washer arranged adjacent the fixed washer; and the second set of washers is arranged between the bearing and the second end of the pivot shaft, and the second set of washers comprises: an O-ring arranged adjacent to the bearing, a fixed washer mounted fixedly with respect to the pivot shaft housing; a washer flat and a washer arranged adjacent to the fixed washer and the C-clip for retaining the pivot shaft housing with the pivot shaft is arranged adjacent to the washer bold.

### BRIEF DESCRIPTION OF THE DRAWINGS

The present invention will now be described with reference to the accompanying figures, in which:
Fig. 1 is a perspective view of a wiper module for a wiper apparatus for a vehicle;
Fig. 2 shows a perspective view of a pivot shaft assembly according to the first embodiment of the invention;
Fig. 3 is an exploded view of a pivot shaft assembly according to the first embodiment of the invention;
Fig. 4a, 4b, 4c, 4d shows self-positioning fixed washers according to the first embodiment of the invention;
Fig. 5 shows a perspective view of a pivot shaft assembly according to the second embodiment of the invention;
Fig. 6 shows an exploded view of a pivot shaft assembly according to the second embodiment of the invention;
Fig. 7 shows a cross-section of the spring type fixed washer according to the second embodiment of the invention;
Fig. 8 shows a perspective view of a pivot shaft assembly according to the third embodiment of the invention;
Fig. 9 shows an exploded view of a pivot shaft assembly according to the third embodiment of the invention;
Fig. 10 shows a perspective view of spring C-clip according to the third embodiment of the invention.

### DETAILED DESCRIPTION OF THE PREFERRED EMBODIMENTS

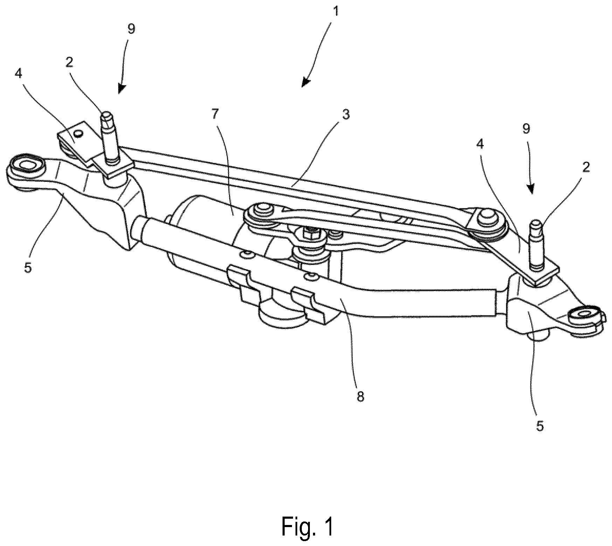

Fig. 1 shows a general view of an exemplary wiper module 1 for a vehicle wiper apparatus. As can be seen on Fig. 1, the wiper module 1 comprises two pivot shaft assemblies 9. Each pivot shaft assembly 9 comprises a housing 5 supporting pivot shaft 2 therein. Such a structure of the wiper module 1 is commonly used in vehicles. The wiper module 1 illustrated in Fig. 1 is built up with a wiper motor 7 connected to each pivot shaft assemblies 9 with a link assembly 3. The wiper module 1 includes two cranks 4. The link assembly 3 is coupled with the pivot shaft 2 via the crank 4. The wiper motor 7 provides rotational movement to the link assembly 3. The link assembly 3 further drives the pivot shaft 2 via the crank 4. Thus, the pivot shaft 2 rotates in the pivot shaft housing 5. The wiper module 1 further comprises a frame tube 8 for supporting the pivot shaft housing 5.

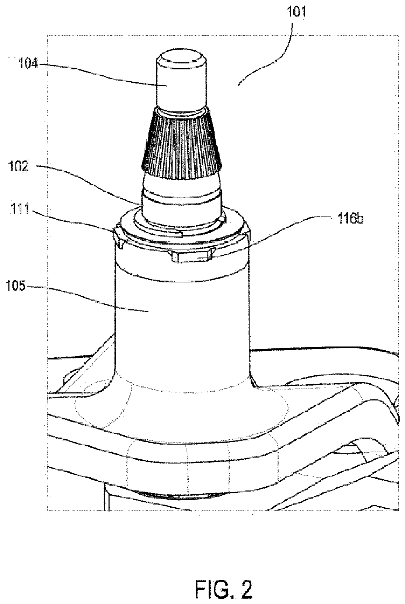

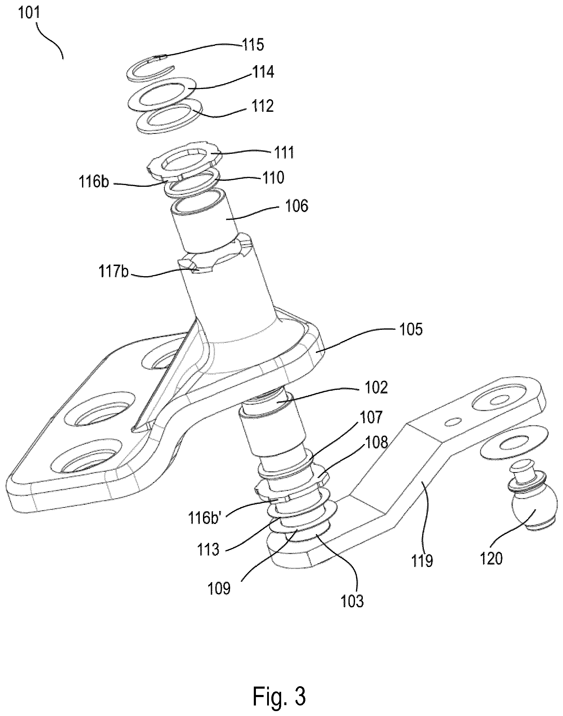

Fig. 2 shows a perspective view of a first embodiment of the pivot shaft assembly 101 according to the invention in assembled state. A pivot shaft 102 is housed in a pivot shaft housing 105. A fixed washer 111 is mounted on the pivot shaft 102. Protrusions 116b of the fixed washer 111 are fixed in recesses 117b (clearly shown on Fig. 3) formed in the pivot shaft housing 105. The recesses 117b of the pivot shaft housing 105 have shape corresponding to the protrusions 116b of the fixed washer 111.

Fig. 3 shows an exploded view of the pivot assembly 101 for a wiper apparatus for a vehicle according to the first embodiment of the invention. The pivot shaft assembly 101 comprises a pivot shaft 102 and a pivot shaft housing 105 for housing the pivot shaft 102. The pivot shaft 102 has a first end 103 for fixing to a support element, for example crank 119, to transfer a rotational movement to the wiper apparatus and a second end 104 (shown on Fig. 2) for mounting a wiper arm of the wiper apparatus. Typically, the crank 119 is mounted to a ball stud 120. The pivot assembly 101 comprises a first set of washers and a second set of washers arranged on the pivot shaft 102. The first set of washers is arranged on the pivot shaft 102 adjacent to the first end 103 of the pivot shaft 102. The second set of washers is arranged on the pivot shaft 102 adjacent to the second end 104 of the pivot shaft 102. Two bearings 106 are arranged on the pivot shaft 102 between the first set of washers and the second set of washers. In the embodiments shown on the drawings two bearings are shown. The assembly with two bearings is especially preferred for wiper apparatus for large vehicles, for example trucks. However, an assembly with only one bearing or without bearing are also possible.

The first set of washers is arranged between the bearing 106 and the first end 103 of the pivot shaft 102. The first set of washers comprises an O-ring 107 arranged adjacent to the bearing 106, a self-positioning fixed washer 108 mounted fixedly with respect to the pivot shaft housing 105 arranged adjacent to the O-ring 107 and a spring washer 113 arranged adjacent the fixed washer 108. Between the spring washer 113 and a crank 119, a flat washer 109 is provided. The second set of washers is arranged between the bearing 106 and the second end 104 of the pivot shaft 102. The second set of washers comprises an O-ring 110 for sealing the bearing 106. The O-ring 110 is arranged adjacent to the bearing 106. A self-positioning fixed washer 111 is mounted fixedly with respect to the pivot shaft housing 105 adjacent to the O-ring 110. The pivot shaft assembly 101 comprises also a washer 112 and a flat washer 114 followed by a C-clip 115. The C-clip 115 retains the pivot shaft housing 105 with the pivot shaft 102.

In the embodiment shown on Fig. 2 and fig. 3 the fixed washer 111 and the fixed washer 108 are self-positioning fixed washers. However, the pivot shaft assembly with only one self-positioning fixed washer can be realized. On figures only recesses 117b for receiving protrusions 117b the fixed washer 111 are shown. The pivot shaft housing 105 is also provided with recesses (not shown) for receiving protrusions 166b'of the fixed washer 108. The protrusions 116b of the fixed washer 111 fix the fixed washer 111 with respect to the pivot shaft housing 105. The pivot shaft housing 105 is provided with recesses 117b having shape corresponding to the protrusions 116bof the fixed washer for fixing the fixed washer 111 with respect to the pivot shaft housing 105.

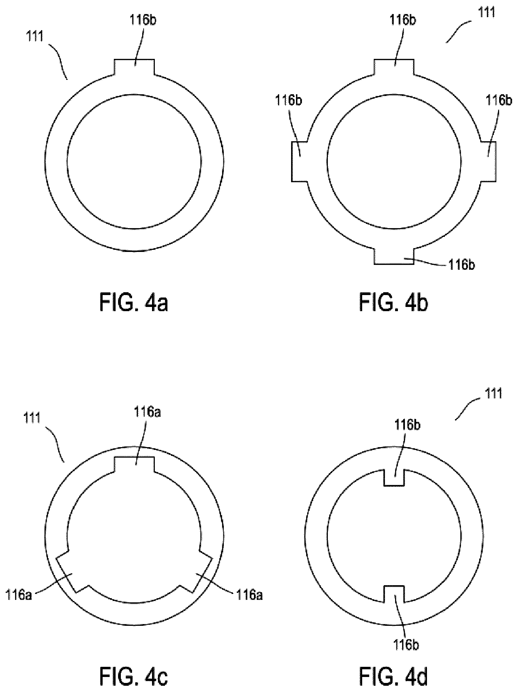

The fixed washers 111, 108 according to the first embodiment of the invention are provided with four protrusions 116b,116b' arranged on outer circumference of the fixed washer 111 as shown on Fig. 4b. However, the fixed washer 111 provided with one, two or three protrusions or recesses, as shown on Fig. 4a. Fig. 4d and Fig. 4c, respectively, can be realized. The recess 116a or protrusion 116b is preferably in the form of cut-out as shown on Fig. 4a, 4b,4c,4d. A shape of protrusions or recesses as shown of figures is only exemplary and can be also for example rounded. Preferably, a fixed washer 111 is provided with recesses in the form of cut outs 116a arranged on outer circumference of the fixed washer as shown on Fig. 4b. In another embodiment, the recess is in the form of a cavity arranged on the plane of the fixed washer, projecting form the plane of a fixed washer (not shown). In yet another embodiment, the fixed washer is provided with protrusion, for example in the form of a projection, arranged on the plane of the fixed washer (not shown).

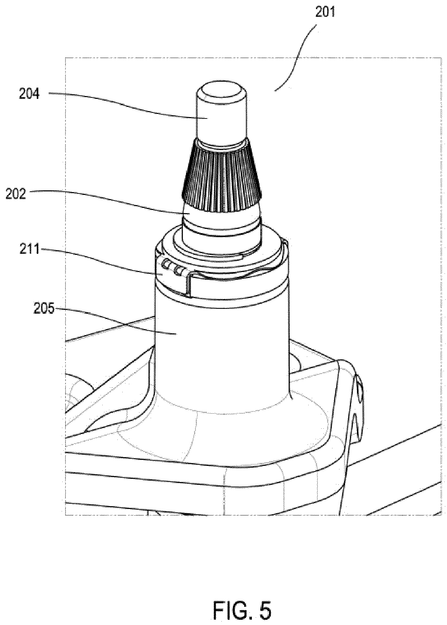

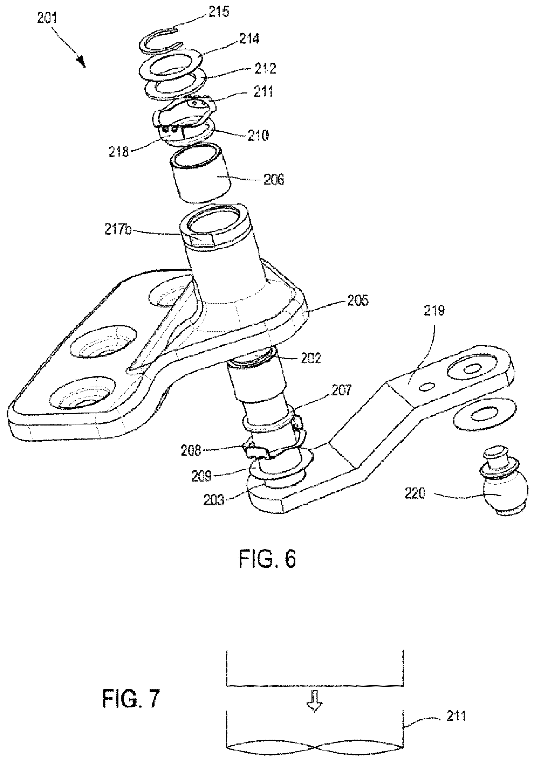

Fig. 5 shows a perspective view of a second embodiment of the pivot shaft assembly 201 according to the invention in assembled state. A pivot shaft 202 is housed in a pivot shaft housing 205. A fixed washer 211 is mounted on the pivot shaft 102. The fixed washer 211 is a spring type fixed washer 211. Detailed view of the spring type fixed washer 211 is shown on Fig. 7. On Fig. 7, above the spring type fixed washer 211, a state of the art washer is shown.

Fig. 6 shows a pivot shaft assembly 201 for a wiper apparatus for a vehicle according to the second embodiment of the invention. The pivot assembly 201 comprises a pivot shaft 202 and a pivot shaft housing 205 for housing the pivot shaft 202. The pivot shaft 202 has a first end 203 for fixing to a support element, for example crank 219, for transfer a drive to the wiper apparatus and a second end 204 (shown on Fig. 5) for mounting a wiper arm of the wiper apparatus. Typically, the crank 219 is mounted to a ball stud 220. First set of washers and second set of washers are arranged on the pivot shaft 202. The first set of washers is arranged adjacent to the first end 203 of the pivot shaft 202. The second set of washers is arranged adjacent to the second end 204 of the pivot shaft 202. Between the first set of washers and the second set of washers two bearing 206 are arranged on the pivot shaft 202. The first set of washers is arranged between the bearings 206 and the first end 203 of the pivot shaft 202. The first set of washers comprises an O-ring 207 for sealing the bearing 206. The O-ring 207 is arranged adjacent to the bearing 206. The first set of washers further comprises a fixed washer 208 mounted fixedly with respect to the pivot shaft housing 205, arranged adjacent to the O-ring 206. The fixed washer shown on Fig. 6 is a flange washer. A washer flat 209 is arranged between the fixed washer 208 and first end of the pivot shaft 202.

The second set of washers is arranged between the bearing 206 and the second end 204 of the pivot shaft 202. The second set of washers comprises an O-ring 210 for sealing the bearing 206. The O-ring 210 is arranged adjacent to the bearing 206. The second set of washers further comprises a fixed washer 211 mounted fixedly with respect to the pivot shaft housing 205. Next to the fixed washer 211, a washer flat 212 and a washer 214 followed by C-clip 215 are provided. The C-clip 215 for retaining the pivot shaft housing 205 with the pivot shaft 202. The fixed washer 211 is a spring type fixed washer 211 providing correction of axial play of the pivot shaft 202. The spring type fixed washer 211 is shown on Fig. 5. The spring type fixed washer 211 has a shape of a fixed washer which allow the washer 211 to be fixedly mounted with respect to the pivot shaft housing 205 and the washer 211 is made of spring type material used for manufacturing of spring washers. In the embodiment shown on the Fig. 6 the fixed washer 211 is a flange washer provided with a protrusion 218 to be located in a recess 217b. However, the spring type fixed washer 211 can be any type of fixed washer, for example a self-positioning fixed washer as described above or any other known in the art.

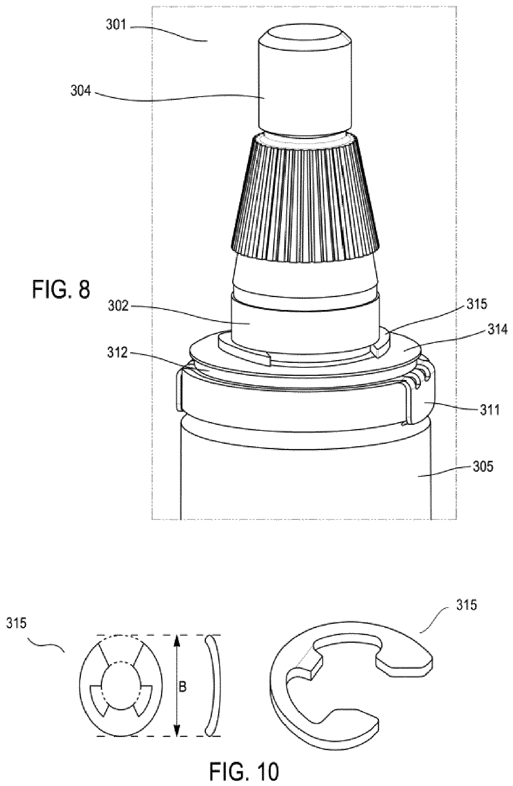

Fig. 8 shows a perspective view of a third embodiment of the pivot shaft assembly 301 according to the invention in assembled state. A pivot shaft 302 is housed in a pivot shaft housing 305. A fixed washer 311, a washer 312 and a washer flat 314 arranged on the pivot shaft 302 can be seen on the Fig. 8. Next to the washer flat 314, a spring C-clip 315 is arranged. Detailed view of the spring type C-clip 315 is shown on Fig. 10.

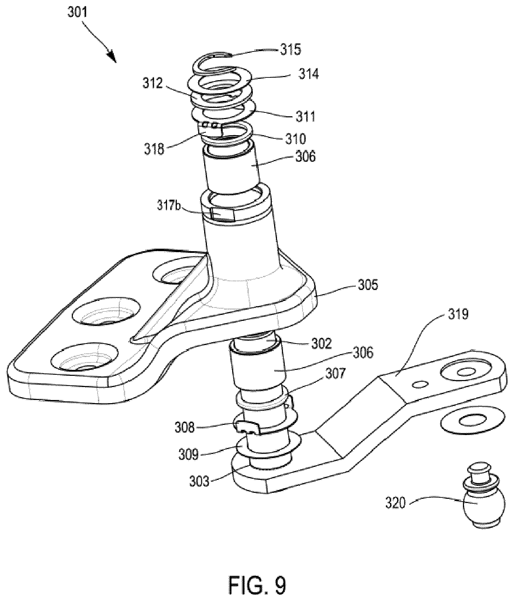

Fig. 9 shows a pivot shaft assembly 301 for a wiper apparatus for a vehicle according to the third embodiment of the invention. The pivot assembly 301 comprises a pivot shaft 302 and a pivot shaft housing 305 for housing the pivot shaft 302. The pivot shaft 302 has a first end 303 for fixing to a support element, for example crank 319, for transfer a drive to the wiper apparatus and a second end 304 (shown on Fig. 8) for mounting a wiper arm of the wiper apparatus. Typically, the crank 319 is mounted to a ball stud 320. First set of washers and second set of washers are arranged on the pivot shaft 302. The first set of washers is arranged adjacent to the first end 303 of the pivot shaft 302. The second set of washers is arranged adjacent to the second end 304 of the pivot shaft 302. Two bearings 306 are arranged on the pivot shaft 302 between the first set of washers and the second set of washers. The first set of washers is arranged between the bearing 306 and the first end 303 of the pivot shaft 302. The first set of washers comprises an O-ring 307 arranged adjacent to the bearing 306, a fixed washer 308 mounted fixedly with respect to the pivot shaft housing 305, arranged adjacent to the O-ring 307. A washer flat 309 is arranged adjacent the fixed washer 308.

The second set of washers is arranged between the bearing 306 and the second end 304 of the pivot shaft 302. The second set of washers comprises an O-ring 310 arranged adjacent to the bearing 306. Adjacent to the O-ring 310 a fixed washer 311 mounted fixedly with respect to the pivot shaft housing 305 is arranged. The fixed washer 311 is a flange washer. The fixed washer is provided with protrusion 318 in the form of flange to be located in a recess 317b. A C-clip 315 for retaining the pivot shaft housing 305 with the pivot shaft 302 is arranged next to the washer flat 314. Between the washer flat 314 and the fixed washer 311, washer a washer 312 is provided. The C-clip 315 is a spring C-clip. Thus the spring C-clip 315 not only retains the pivot shaft housing 305 with the pivot shaft 302 but also provides elimination of an axial play of the C-clip 315.

The described invention is not restricted to the embodiments shown but is susceptible of numerous modifications and variations, all of which are within the scope of the appended claims. All the details may further be replaced with other technically equivalent elements.

## Claims

1. A pivot shaft assembly (101) for a wiper apparatus for a vehicle comprising:
a pivot shaft (102);
a pivot shaft housing (105) for housing the pivot shaft (102);
a fixed washer (111) mounted fixedly with respect to the pivot shaft housing (105);
**characterized in that**
the fixed washer (111) is a self-positioning fixed washer provided with at least one recess (116a) and/or protrusion (116b) for positioning of the fixed washer (111) with respect to the pivot shaft housing (105); and the pivot shaft housing (105) is provided with protrusion and/or recess (117b) having shape corresponding to the recess (116a) and/or protrusion (116b) of the fixed washer for fixing the fixed washer (111) with respect to the pivot shaft housing (105).

2. A pivot shaft assembly according to the claim 1, **characterized in that** the self-positioning fixed washer (111) is provided with recess (116a) and/or protrusion (116b) located on a circumference of the fixed washer.

3. A pivot shaft assembly according to the claim 1 or 2, **characterized in that** the self-positioning fixed washer (111) is provided with three recesses (116a) and/or protrusions (116b) arranged symmetrically on the circumference of the fixed washer.

4. A pivot shaft assembly according to the claim 1 or 2, **characterized in that** the self-positioning fixed washer (111) is provided with four recess and/or protrusion (116a, 116b) located symmetrically on the circumference of the fixed washer.

5. A pivot shaft assembly according to any claim 1-4 **characterized in that** the recess (116a) is in the form of cut-out.

6. A pivot shaft assembly according to any claim 1-5 **characterized in that** the recess (116a) and/or protrusion (116b) is located substantially in the plane of the fixed washer.

7. A pivot shaft assembly (201) for a wiper apparatus for a vehicle comprising:
a pivot shaft (202);
a pivot shaft housing (205) for housing the pivot shaft (202);
a fixed washer (211) mounted fixedly with respect to the pivot shaft housing (205);
**characterized in that** the fixed washer (211) is a spring type fixed washer (211) further providing correction of axial play of the pivot shaft (202).

8. A pivot shaft assembly according to the claim 7, **characterized in that** the spring type fixed washer (211) is a flange washer; and the pivot shaft housing (205) is provided with recess (217a) having shape corresponding to the recess and/or protrusion (218) of the flange washer for fixing the flange washer with respect to the pivot shaft housing (205).

9. A pivot shaft assembly according to the claim 7, **characterized in that** the spring type fixed washer (211) is a self-positioning fixed washer provided with at least one recess and/or protrusion for positioning of the fixed washer (211) with respect to the pivot shaft housing (205); and the pivot shaft housing (205) is provided with protrusion or recess having shape corresponding to the recess, and/or protrusion of the fixed washer (211) for fixing the fixed washer with respect to the pivot shaft housing.

10. A pivot shaft assembly according to the claim 7 -9 , **characterized in that** the spring type self-positioning fixed washer (211) is provided with recess and/or protrusion (116b) arranged on circumference of the fixed washer (211).

11. A pivot shaft assembly according to the claim 7-10, **characterized in that** the fixed washer (211) is provided with three recesses and/or protrusions arranged symmetrically on the circumference of the fixed washer (211).

12. A pivot shaft assembly according to the claim 7-11, **characterized in that** the fixed washer (211) is provided with four recesses and/or protrusions arranged symmetrically on the circumference of the fixed washer (211).

13. A pivot shaft assembly (301) for a wiper apparatus for a vehicle comprising:
a pivot shaft (302);
a pivot shaft housing (305) for housing the pivot shaft (302);
a C-clip (315) for retaining the pivot shaft housing (305) with the pivot shaft (302);
**characterized in that** the C-clip (315) is a spring C-clip further providing elimination of an axial play of the C-clip (315).

14. A pivot shaft assembly according to the claim 13, **characterized in that** the fixed washer (311) is a flange washer.

15. A pivot shaft assembly according to the claim 13, **characterized in that** the fixed washer (311) is a self-positioning washer provided with recess and/or protrusion for positioning of the fixed washer (311) with respect to the pivot shaft housing (305); and the pivot shaft housing (305) is provided with recess and/or protrusion having shape corresponding to the recess and/or protrusion of the fixed washer (311) for fixing the fixed washer (311) with respect to the pivot shaft housing (305).
